(19) Europäisches Patentamt / European Patent Office / Office européen des brevets

(11) **EP 3 113 345 B1**

(12) **EUROPEAN PATENT SPECIFICATION**

(45) Date of publication and mention of the grant of the patent:
**23.02.2022 Bulletin 2022/08**

(21) Application number: **15174720.1**

(22) Date of filing: **01.07.2015**

(51) International Patent Classification (IPC):
*H02M 1/12* *(2006.01)*    *H02M 1/42* *(2007.01)*
*H02M 3/158* *(2006.01)*   *H02M 7/06* *(2006.01)*
*H02M 7/217* *(2006.01)*   *H02M 3/155* *(2006.01)*
*H02M 3/00* *(2006.01)*    *H02M 3/335* *(2006.01)*
*H02M 7/483* *(2007.01)*   *H02M 7/487* *(2007.01)*
*H02M 1/00* *(2006.01)*

(52) Cooperative Patent Classification (CPC):
**H02M 1/4216; H02M 1/12; H02M 3/158;
H02M 7/06; H02M 7/217;** H02M 1/007;
H02M 3/005; H02M 3/1557; H02M 3/3353;
H02M 3/33576; H02M 7/483; H02M 7/487;
Y02B 70/10

(54) **ELECTRICAL CONVERTER AND CONTROL METHOD**

ELEKTRISCHER WANDLER UND STEUERUNGSVERFAHREN

CONVERTISSEUR ÉLECTRIQUE ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **ABB Schweiz AG**
**5400 Baden (CH)**

(72) Inventors:
• **Lukas Schrittwieser**
**8092 Zürich (CH)**

• **Kolar, Johann Walter**
**8044 Zürich (CH)**
• **Soeiro,Batista Thiago**
**5415 Nussbaumen (CH)**
• **Canales, Francisco**
**5405 Baden-Dättwil (CH)**

(74) Representative: **Qip Patentanwälte**
**Dr. Kuehn & Partner mbB**
**Goethestraße 8**
**80336 München (DE)**

(56) References cited:
**WO-A1-2015/021489       CH-A2- 704 553
US-A1- 2009 040 800**

**Description**

FIELD OF THE INVENTION

The invention relates to the field of current conversion. In particular, the invention relates to an electrical converter and a method for controlling the electrical converter.

BACKGROUND OF THE INVENTION

For example, during charging of electrical vehicles, current conversion between an AC voltage from an electrical grid into a DC voltage takes place and the DC voltage is then provided to the battery to be charged. For example, an electrical converter may convert a three-phase AC voltage and may supply it to a DC bus, to which several batteries may be connected. Also data centres and telco sites usually need such an AC-to-DC conversion. In general, low voltage (about 400 V) DC distribution systems and DC micro grids typically require AC-to-DC conversion from an existing AC electrical grid.

Typically, if the voltage on the DC bus is lower than the full-wave rectified AC voltage, electrical converters with two stages are used. Such electrical converters may comprise a boost-type power factor correction (PFC) stage with a 700V - 800V DC output connected in series with a DC-DC converter to achieve the desired lower DC bus voltage. Buck-type PFC converters are an alternative, allowing a single-stage energy conversion between the three-phase mains and a DC bus with lower voltage.

For example, J. W. Kolar and T. Friedli, "The Essence of Three-Phase PFC Rectifier Systems - Part I," IEEE Transactions on Power Electronics, vol. 28, no. 1, pp. 176-198, Jan 2013; and T. Soeiro, T. Friedli and J. W. Kolar, "Three-phase high power factor mains interface concepts for Electric Vehicle battery charging systems," in Applied Power Electronics Conference and Exposition (APEC), Feb 2012, pp. 2603-2610, show electrical converters, which are adapted for AC to low voltage DC conversion.

CH 704 553 A2 shows a hybrid three-phase AC/DC converter with a three-phase bridge circuit and a four-quadrant switch, which are interconnected via a lower, intermediate and upper interconnection point with an output converter. An input filter comprises three star-connected capacitors.

DESCRIPTION OF THE INVENTION

It is an objective of the present invention to provide a low cost and simple designed electrical converter for AC-to-DC power conversion, which generates low current distortions at its input.

This objective is achieved by the subject-matter of the independent claims. Further exemplary embodiments are evident from the dependent claims and the following description.

An aspect of the invention relates to an electrical converter, which, for example may be used for converting a three-phase AC voltage from an electrical grid (which may be a medium voltage, i.e. more than 1.000 kV into a low AC or DC output voltage, i.e. below 1.000 kV).

According to the embodiments of the invention, the electrical converter comprises an input voltage selector for converting a three-phase AC input voltage provided at three phase inputs of the electrical converter into an intermediate three-phase voltage provided at an upper voltage node, a middle voltage node and a lower voltage node; capacitors interconnecting an upper voltage node, a middle voltage node and a lower voltage node; and an output converter for converting the intermediate three-phase voltage into an output voltage.

The input voltage selector, which may be seen as a first converter stage, is adapted for connecting the upper voltage node to a phase input with the highest voltage of the three-phase AC input voltage, the lower voltage node to a phase input with the lowest voltage of the three-phase AC input voltage, and the middle voltage node to the phase input having a voltage between the highest voltage and the lowest voltage. In other words, the input voltage selector may convert the three sinusoidal AC input voltages into three piece-wise sinusoidal voltages provided at the upper voltage, middle voltage and lower voltage node.

The output converter, which may be seen as a second converter stage and/or which may have different topologies (see below) may convert these piece-wise sinusoidal voltages into a DC voltage or a further AC voltage of different voltage magnitude and/or different frequency.

Furthermore, three or more capacitors are arranged between the input voltage selector and the output converter. These capacitors may be seen as (a part of) an input filter for the output converter. These capacitors may interconnect the upper voltage, middle voltage and lower voltage node.

Since the capacitors are arranged behind (and not before) the input voltage selector from the point of the view of the phase inputs of the electrical converter (and an electrical grid connected to these phase inputs), the current distortions at the intersection of phase voltages in the phase inputs, which are mainly caused by switching voltage ripples across the capacitors, may be better controlled. For example, with the method described below, the electrical converter is controlled such that the current distortions caused by the switching of the output converter are suppressed by switching the input voltage selector in a specific way, when two of the phase voltages in the phase inputs cross.

According to the embodiments of the invention, the upper voltage node, the middle voltage node and the lower voltage node are star-connected and/or are delta-connected via the capacitors. Each node may be directly connected via a capacitor with both of the other nodes or may be connected with a capacitor via a star-point with the other nodes.

According to the embodiments of the invention, a filter inductor is interconnected in each phase input. These filter inductors and the capacitors may be seen as parts of a (split) LC-filter before the input of the output converter. The input voltage selector may be seen as interconnected in this electrical filter.

According to an embodiment of the invention, each of the upper voltage node, the middle voltage node and the lower voltage node is connected via a filter inductor with the capacitors interconnecting the upper voltage node, the middle voltage node and the lower voltage node.

There are several embodiments of how the input voltage selector may be designed to achieve the above-mentioned distribution of the three sinusoidal AC input voltages into the three piece-wise sinusoidal voltages provided at the high, middle and lower voltage node.

According to an embodiment of the invention, the input voltage selector comprises three selector legs for interconnecting one of the phase inputs with the upper voltage node, the middle voltage node and the lower voltage node, each selector leg comprising a half-bridge and an injector switch unit, the half-bridge connected to the upper voltage node and lower voltage node and the injector switch unit connected to the middle voltage node.

It has to be noted that the injector switch unit also may be provided in the form of a half-bridge. For example, each selector leg may comprise two half-bridges in parallel.

According to an embodiment of the invention, the half-bridge comprises diodes and/or the half-bridge comprises controllable semiconductor switches. When the electrical converter is a unidirectional converter, the half-bridge may be a diode-half-bridge. When the electrical converter is a bidirectional converter, these diodes may have to be substituted with semiconductor switches to allow a power transfer towards the phase inputs.

There are also several possibilities, how the phase inputs are connected with the injector switch unit.

According to an embodiment of the invention, the injector switch unit comprises two series-connected semiconductor switches, which are reverse to each other, the injector switch unit comprises one controllable semiconductor switch interconnected in parallel with two pairs of two series-connected diodes and/or the injector switch unit comprises a half-bridge of diodes and/or controllable semiconductor switches.

According to an embodiment of the invention, the injector switch unit interconnects a middle point of the half-bridge with the middle voltage node or the injector switch unit is interconnected between arms of the half-bridge.

According to an embodiment of the invention, the output converter is a DC-to-DC converter or a DC-to-AC converter. The output converter may be adapted for converting the piece-wise sinusoidal voltage provided at the nodes at the output of the input selector in a DC voltage or into a possibly multi-phase AC voltage. In the case of a DC-to-DC conversion, the electrical converter may be used for DC-distribution systems, datacenter and battery charging.

The output converter may have many possible topologies, for example, it may be or may comprise at least one of: a simple buck or boost converter, a buck-boost converter, a non-inverting buck-boost converter, a SEPIC converter, a Cuk converter, an inverting buck-boost converter, and/or interleaved buck or boost converters.

According to an embodiment of the invention, the output converter comprises three-level half-bridges; and/or wherein the half-bridges are NPC based or T-type based.

According to an embodiment of the invention, the output converter is an isolated output converter comprising a transformer between two subconverter units.

According to an embodiment of the invention, a common mode filter is provided at an output of the output converter. For example, the output converter may have two DC outputs, which may be coupled with a common mode inductor and/or a common mode capacitor.

According to an embodiment of the invention, a star-point of the capacitors interconnecting the upper voltage node, the middle voltage node and the lower voltage node is connected with the common mode filter. For example, the common mode filter may comprise two series connected common mode capacitors, which are interconnecting two outputs of the output converter. The point between the two capacitors may be connected to the star-point of the capacitors interconnecting the upper voltage node, the middle voltage node and the lower voltage node.

A further aspect of the invention relates to a method for controlling an electrical converter as described in the above and in the following. The method is performed by a controller, which based on measurements in the electrical converter determines switching instants of semiconductor switches of the electrical converter.

The measurements may provide information on currents as input currents, intermediate currents and/or output currents as well as voltages, such as input (grid) voltages, intermediate voltages, capacitor voltages and/or output voltages in the electrical converter.

It has to be understood that features of the method as described in the above and in the following may be features of the electrical converter as described in the above and in the following and vice versa.

According to the embodiments of the invention, the method comprises: switching semiconductor switches of the input voltage selector such that the upper voltage node is connected to the phase input with the highest voltage of the three-phase AC input voltage, the lower voltage node is connected to the phase input with the lowest voltage of the three-phase AC input voltage, and the middle voltage node is connected to the phase input with a voltage between the highest voltage and the lowest voltage; wherein, when two of the voltages of the three-phase AC input voltage are crossing, the semiconductor switches of the input voltage selector are switched such that the corresponding two phase inputs are short-circuited for a specific duration in order to lower current distortions in the phase inputs of the electrical converter.

In general, the controller switches the semiconductor switches of the input voltage selector, such that the highest, intermediate and lowest voltage provided at the phase inputs (for example by an electrical grid) is provided to the highest voltage node, middle voltage node and lowest voltage node. Furthermore, the controller may switch semiconductor switches of the output converter (for example with a PWM scheme) such that the (piece-wise sinusoidal) voltages at the nodes are converted into a DC or AC output voltage.

Because the capacitors of the input filter have been moved from the phase input of the input voltage selector to its output, i.e. between the input voltage selector and the output converter, the input voltage selector may be used to mitigate current distortions at the phase inputs of the electrical converter. To achieve this, the controller switches semiconductor switches of the input voltage selector such that during the crossing of the input phases, the phase inputs of the crossing phases are short circuited, which may cancel at least partially the current distortions.

It has to be understood that the crossing of phases not only may relate to the point, where the two phase voltages are equal but also to the vicinity of this point, for example a time interval.

According to the embodiments of the invention, the electrical converter comprises phase inductors, each phase inductor interconnected between a phase input of the electrical converter and a respective phase input of the input voltage selector, wherein the two phase inputs of the electrical converter and the corresponding phase inductors are short-circuited such that a voltage average of a voltage between the corresponding phase inputs of the input voltage selector equals a grid voltage provided between the two phase inputs of the electrical converter.

The electrical converter comprises phase inductors at its phase inputs, which together with the capacitors at the output of the input voltage selector may form a split electrical filter. During the short-circuiting of two phases, the voltages at the phase inputs of the electrical converter may equalize via the phase inductors in such a way that a current reverse to a current distortion is generated, which mitigates the current distortion.

According to the embodiments of the invention, the specific duration, during which the two phase inputs are short-circuited is determined such that during each switching cycle of a PWM modulation scheme of the output converter, the voltage average equals a grid voltage provided between the two phase inputs of the electrical converter. In such a way, the short-circuiting takes place every switching cycle, i.e. the corresponding switch of the input voltage selector is toggled on and off every switching cycle.

According to an embodiment of the invention, the time at which the two phase inputs are short-circuited is determined based on a time, at which a semiconductor switch of an output side DC-DC converter is switched based on a PWM modulation scheme. In other words, the switching time is not determined on the beginning of the switching cycle but on the switching time of the output converter.

The above features of the control method have been described with respect to unidirectional conversion with power transfer in the direction from the voltage input selector to the output converter. In the case, the electrical converter is a bidirectional converter, also a power transfer in the reverse direction is possible and current distortions may be mitigated by correspondingly switching semiconductor switches of the input voltage selector.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a unidirectional converter according to an embodiment of the invention.

Fig. 2 schematically shows a bidirectional converter according to an embodiment of the invention.

Fig. 3A, 3B, 3C, 3D schematically show embodiments of input voltage selectors for an electrical converter according to an embodiment of the invention.

Fig. 4A, 4B, 4C, 4D, 4E, 4F schematically show embodiments of output converters for an electrical converter according to an embodiment of the invention.

Fig. 5A, 5B, 5C, 5D schematically show embodiments of output converters for an electrical converter according to an embodiment of the invention.

Fig. 6A, 6B schematically show embodiments of output converters for an electrical converter according to an embodiment of the invention.

Fig. 7A, 7B schematically show embodiments of output converters for an electrical converter according to an embodiment of the invention.

Fig. 8 shows a diagram with voltages, currents and switching states during a crossing of two phase voltages, which illustrates a control method according to an embodiment of the invention.

Fig. 9 shows a diagram with voltages and switching states during a switching cycle of the electrical converter.

Fig. 10 shows a diagram with voltages, currents and switching states during a complete oscillation of the input phases, which illustrates a control method according to an embodiment of the invention.

Fig. 11 schematically shows a converter according to a further embodiment of the invention.

In principle, identical parts are provided with the same reference symbols in the figures.

DETAILED DESCRIPTION OF EXEMPLARY EMBODIMENTS

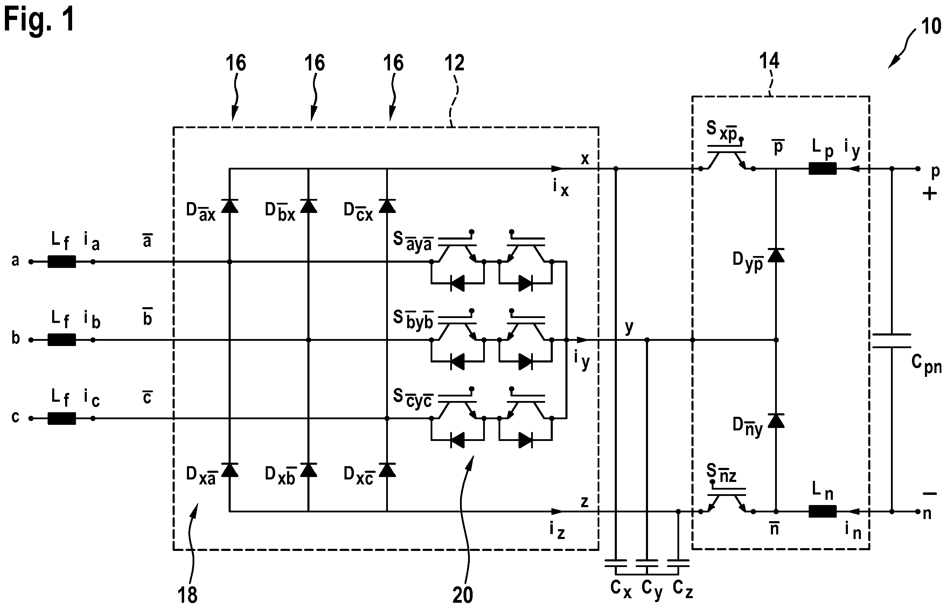

Fig. 1 shows an electrical converter 10 comprising two converter stages 12, 14 in the form of an input voltage selector 12 and an output converter 14. The electrical converter 10 of Fig. 1 is an AC-to-DC converter having three phase inputs a, b, c for connecting to an electrical grid and two DC outputs p, n, which for example may be connected with a DC bus bar of a battery charging station.

The input voltage selector 12 also has three phase inputs $\bar{a}, \bar{b}, \bar{c}$, which are interconnected via the phase inductors $L_f$ with the phase inputs a, b, c, and three outputs x, y, z. These outputs may be seen as an upper voltage node x, a middle voltage node y and a lower voltage node z.

The input voltage selector 12 connects the upper voltage node x to the phase input a, b, c with the highest voltage of the three-phase AC input voltage, the lower voltage node z to a phase input a, b, c with the lowest voltage of the three-phase AC input voltage, and the middle voltage node y to the phase input a, b, c having a voltage between the highest voltage and the lowest voltage. To achieve this, the input voltage selector 12 comprises three selector legs 16, each of which interconnects one of the phase inputs $\bar{a}, \bar{b}, \bar{c}$ with the nodes x, y, z.

Each selector leg 16 comprises a half-bridge 18 (in case of Fig. 1 of diodes) interconnecting the nodes x and z, and an injector switch unit 20 ($S_{aya}$, $S_{byb}$ and $S_{cyc}$) connected to the node y.

The outputs x, y, z of the input voltage selector 16 are the inputs of the output converter 14, which in the embodiment of Fig.1 comprises two DC-DC buck converters and a DC output capacitor $C_{pn}$. The switches of the output converter 14 pare switched with a PWM (pulse width modulation) scheme to generate a DC voltage between the outputs p, n.

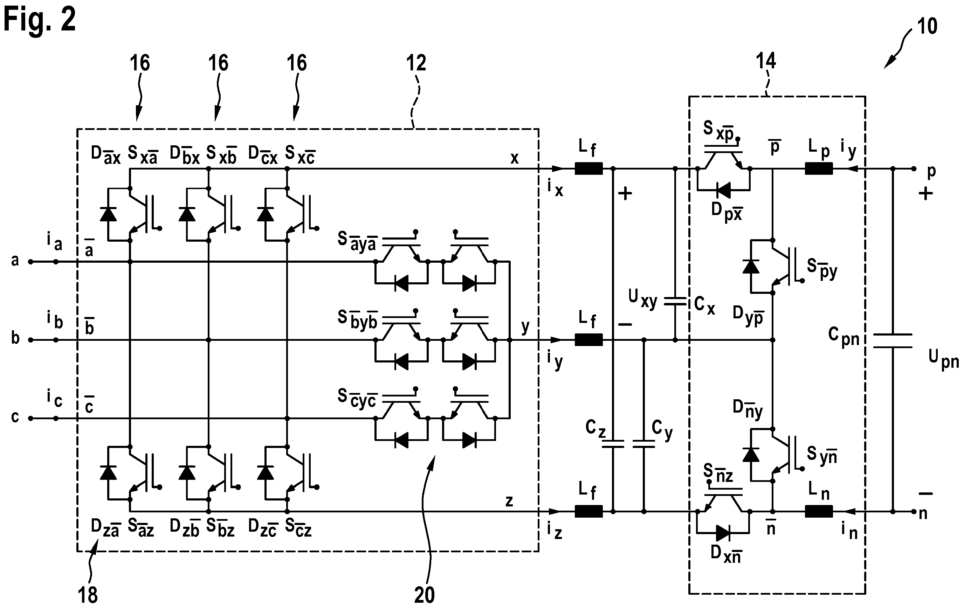

Three AC capacitors $C_x$, $C_y$, $C_z$ are connected between the nodes x, y, z. Note that in Fig. 1, the capacitors $C_x$, $C_y$, $C_z$ are star-connected, while in Fig. 2 the capacitors $C_x$, $C_y$, $C_z$ are delta-connected. However, a delta-connection is also possible in Fig. 1 or a star-connection in Fig. 2. In general, the three capacitors $C_x$, $C_y$, $C_z$ should have equal capacitance, in order to symmetrically load the AC grid. This may be required as the voltages at nodes x, y and z are piece-wise sinusoidal and form a three-phase system within every 60° sector of the AC input voltage.

The phase inductors and the capacitors $C_x$, $C_y$, $C_z$ may be seen as an electrical filter that is split into two parts by the input voltage selector 12.

The structure of the proposed circuit with the capacitors on the output side of the input voltage selector 12 has several advantages: It shortens the commutation loops of the output converters 14, which means that no additional capacitors are required. Furthermore, the currents $i_x$, $i_y$ and $i_z$ flowing through the input voltage selector 12 are continuous with these filter capacitors $C_x$, $C_y$, $C_z$. This leads to a reduction of conduction losses in the switches of the input voltage selector 12. Additionally, the capacitors decouple the switching operations of the input voltage selector 12 and the output converter 14. Finally, in the proposed circuit, the distortions in the AC side input currents $i_a$, $i_b$ and $i_c$ can be prevented by properly modulating the switches in the input voltage selector 12 as described below and above.

Fig. 1 shows a unidirectional converter 10, while Fig. 2 shows a bidirectional converter 10, in which the diodes in the input voltage selector 12 and the output converter 14 have been supplemented with controllable semiconductor switches. A full bidirectional solution may be obtained by connecting active switches in parallel with the diodes and by connecting diodes in parallel with the existent active switches.

Furthermore, as shown in Fig. 2, it may be possible that the outputs x, y, z of the input voltage selector 12 are connected via inductors $L_f$ with the capacitors $C_x$, $C_y$, $C_z$. Thus, the whole electrical LC filter may be arranged between the input voltage selector 12 and the output converter.

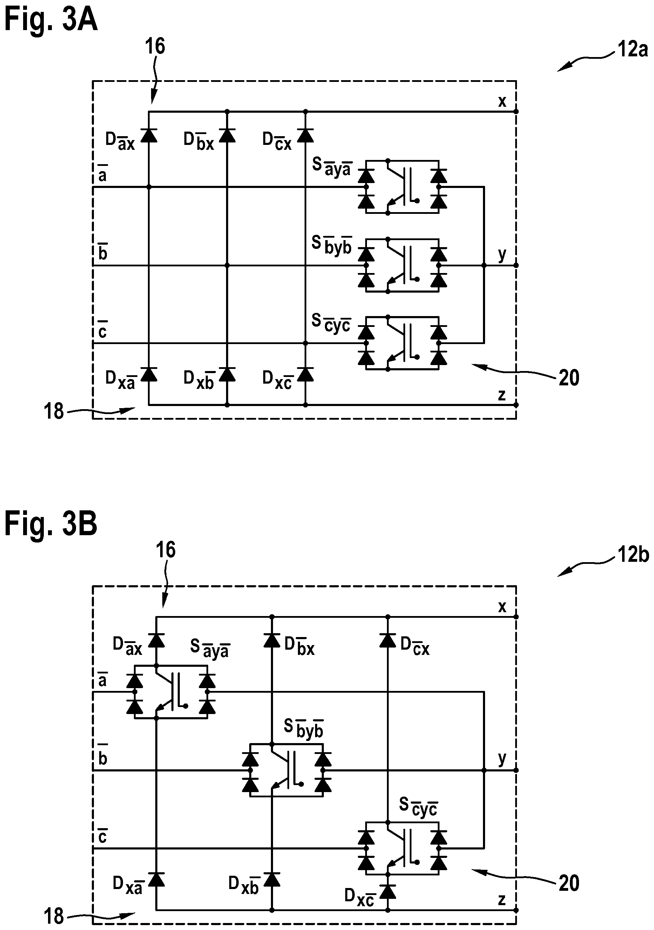

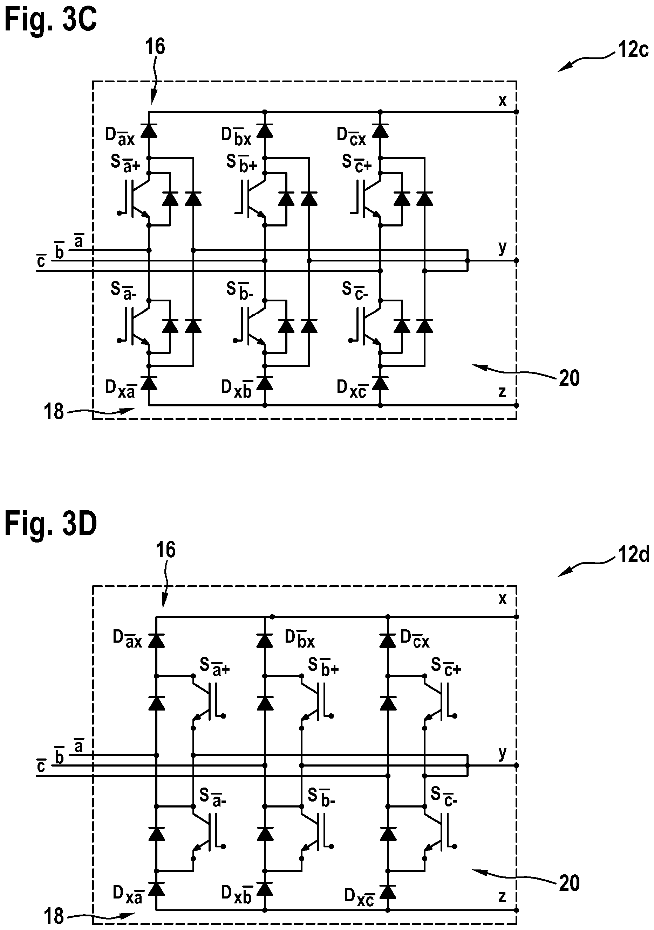

Fig. 3A, 3B, 3C, 3D show different variants of a unidirectional input voltage selector 12a, 12b, 12c, 12d, which may be used in Fig. 1. 12a and 12c may be made bidirectional by connecting active switches in parallel with the diodes Dax, Dbx, Dcx, Dza, Dzb and Dzc.

In the input voltage selector 12a, the injector switch unit 20 is connected via a middle point of the respective half-bridge 18 with the node y. In the input selector 12b, the injector switch unit 20 is integrated into the respective half-bridge 18.

While the injector switch units 20 of Fig. 1 and 2 have two switches connected in antiseries, the injector switch units 20 of Fig. 3A and 3B have one switch interconnected with four diodes.

Fig. 3C and 3D show input voltage selector 12c and 12d with a further half-bridge used as injector switch unit 20 per selector leg 16. In Fig. 3C, an active half-bridge 18 is connected to the phase input, while a passive (diode) half-bridge 20 is connected to the middle voltage node y. Fig. 3D is vice versa.

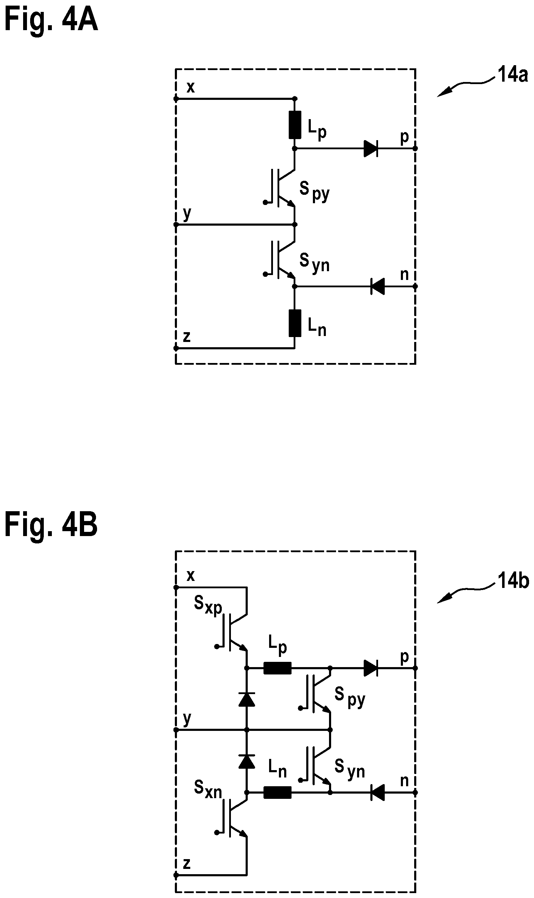

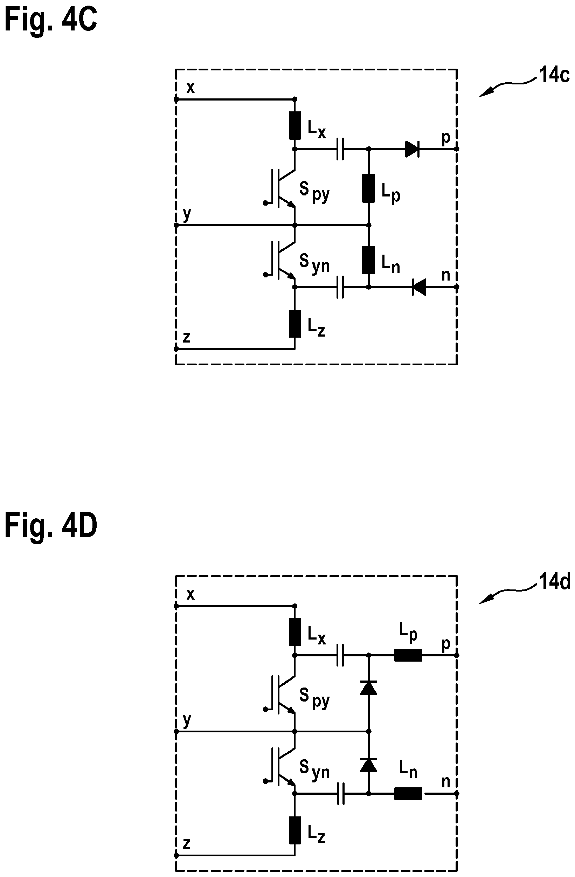

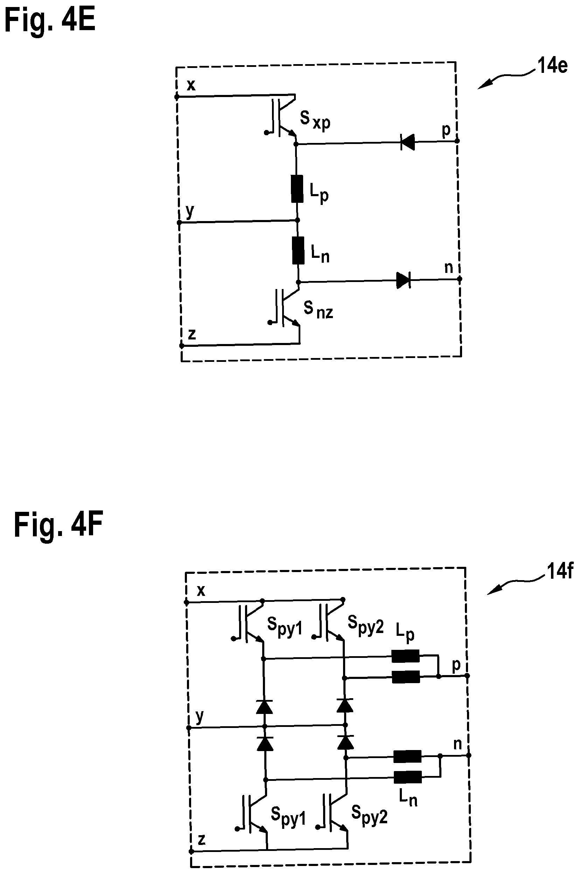

Fig. 4A to 4D show further embodiments 14a to 14f for the output converter stage providing a DC output voltage at outputs p, n. Again, a full bidirectional converter 10 may be obtained by connecting active switches in parallel with the circuit diodes and by connecting diodes in parallel with the existent active switches.

In general, the output converter 14 may be or may comprise a boost converter 14a, a non-inverting boost converter 14b, a SEPIC converter 14c, a Cuk converter 14d with inversed output voltage, an inverting buck-boost converter 14e with reversed output voltage, and/or two interleaved buck converters 14f.

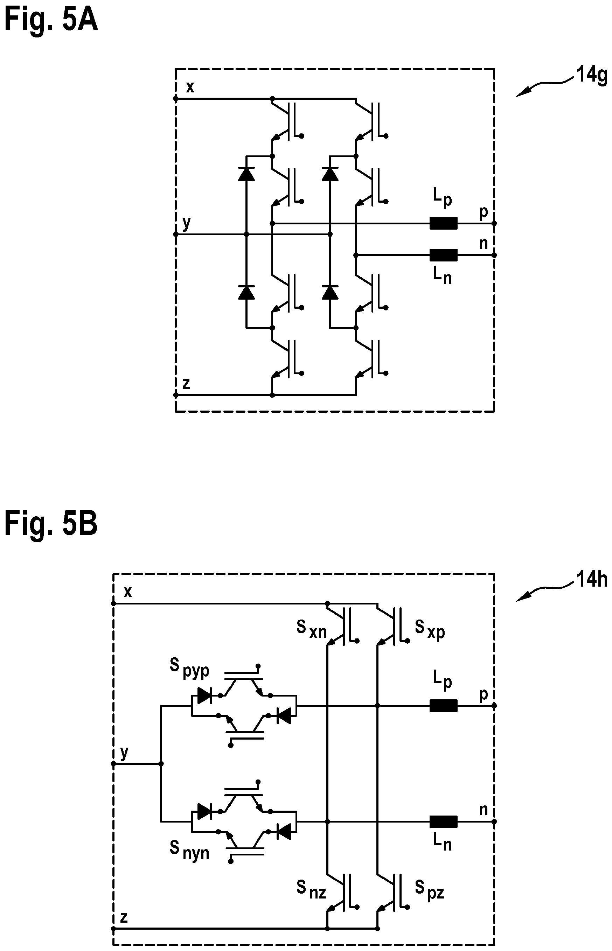

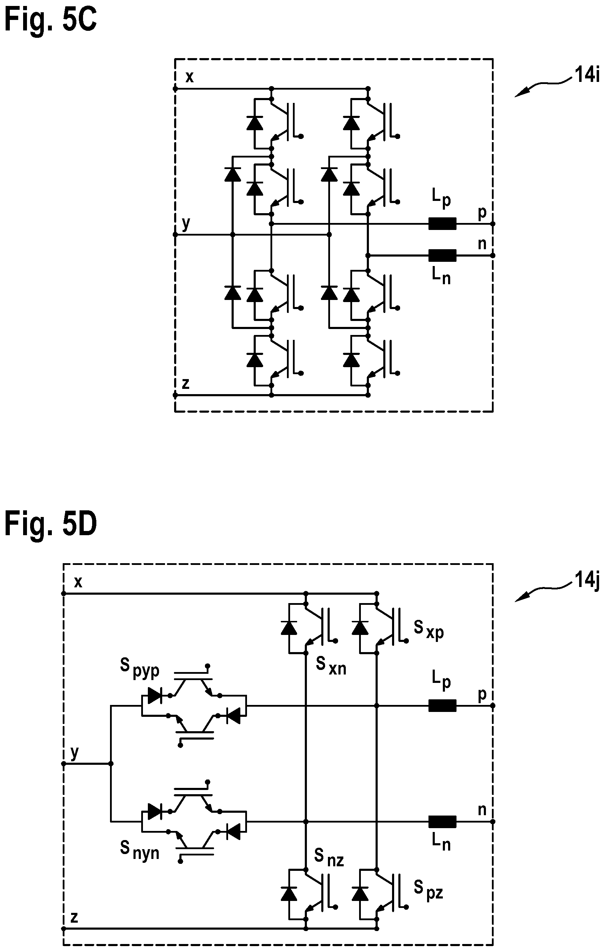

Fig. 5A to 5D show further embodiments 14g to 14j for the output converter stage providing a DC output voltage at outputs p, n based on three-level circuit topologies. By using three-level circuit topologies for the output converter stage, a circuit solution with switchable output voltage polarity can be built. The output converters 14g and 14h support AC-to-DC power transfer only, which means that if the output power is reversed, the load current has to be reversed as well. If additional diodes are added as shown with output converters 14i and 14j, bidirectional power transfer is possible, provided a bidirectional input voltage selector 12 is also used. Output converters 14g and 14i are NPC (neutral point clamped) based, while 14h and 14j are T-type based.

The output converters 14a to 14j (and also 14m and 14n below) are all non-isolating.

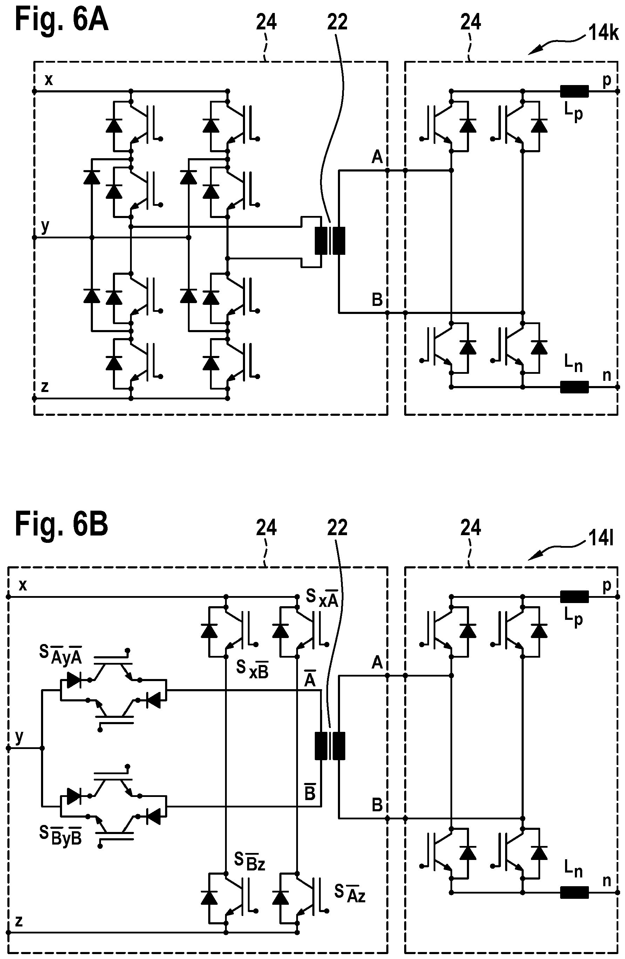

Fig. 6A and 6B show isolating output converters 14k, 141, which comprise an isolating transformer 22 between two subconverters 24. In output converter 14k, an NPC based full-bridge configuration and in output converter 141 a T-type configuration of switches on the transformer's primary side are used. On the transformer's secondary side, an active conventional full-bridge circuit is implemented, however, a simple diode bridge also may be implemented.

Other configurations for the secondary side circuit 24 such as current doubler, voltage doubler, etc. may be used. For example, the secondary side circuit may be like the ones shown in Fig. 6A or 6B, but with the semiconductor switches replaced by diodes.

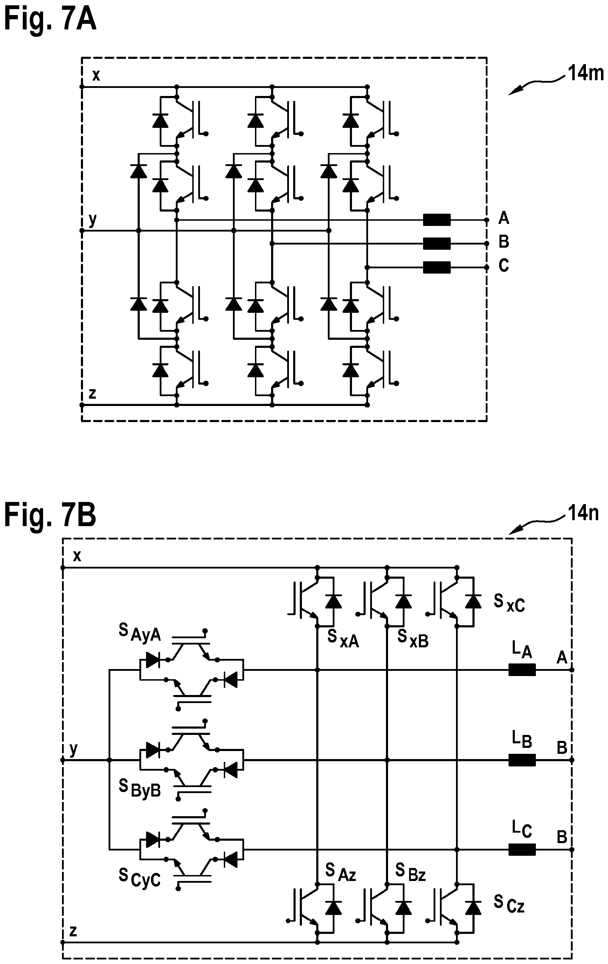

It also may be possible that the electrical converter provides a one phase or three-phase output voltage as shown in Fig. 7A and 7B, which show output converters 14m, 14n with AC output. 14m is a non-isolated converter based on NPC bridge legs and 14n is a non-isolating converter based on T-type bridge legs.

In Fig. 1 to 7B, instead of parallel diodes to a semicoductor switch, anti-parallel diodes inside each IGBT may be used.

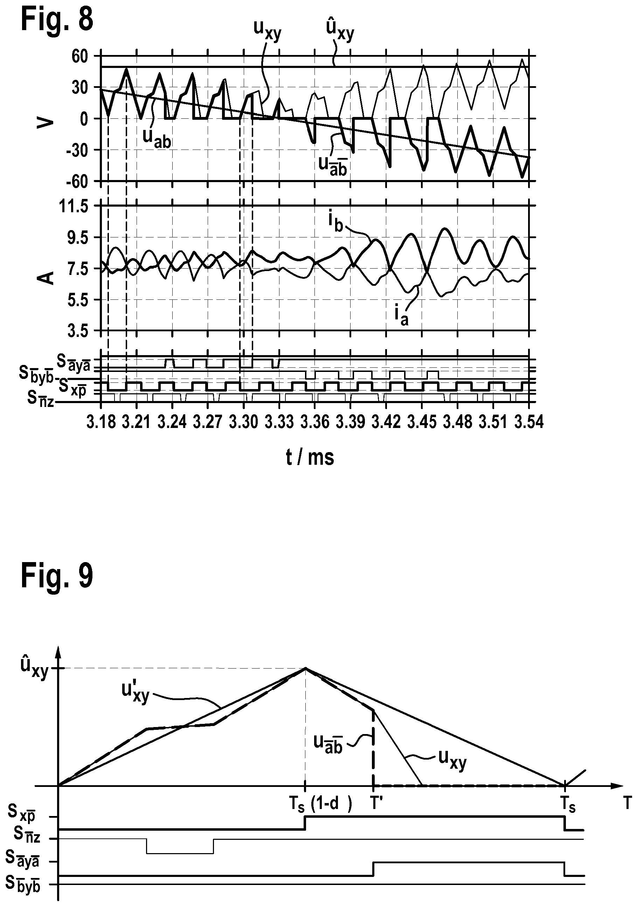

With respect to Fig. 8, 9 and 10, a method of controlling the electrical converter 10 is described.

In the upper part, Fig. 8 shows a diagram with the voltage $u_{ab}$ between the phase inputs a and b, the voltage $u_{\overline{ab}}$ between the phase inputs $\overline{a}$, $\overline{b}$ and the voltage $u_{xy}$ between the upper voltage node x and the middle voltage node y. The middle part of Fig. 8 shows the phase currents $i_a$ and $i_b$ and the lower part shows the switching instants/control signals of the switches (injector switch units 20) $S_{\overline{ay}a}$, $S_{\overline{by}b}$ of the input voltage selector 12 and switches $S_{x\overline{p}}$, $S_{\overline{n}z}$ of the output converter 12.

The voltage $u_{ab}$ is zero, when the corresponding voltages in the phases a, b cross. The other voltages show that there are voltage ripples with a length of the switching cycle of the output converter 14 caused due to the switching of the switches $S_{x\overline{p}}$, $S_{\overline{n}z}$ of the output converter 12.

The AC input current distortions may have a significant contribution to the current THD of the electrical converter 10. These distortions can be prevented by properly modulating the switches in the input voltage selector 12 as described in the following.

In the case, the capacitors $C_x$, $C_y$, $C_z$ would be interconnecting the phase inputs $\overline{a}$, $\overline{b}$, $\overline{c}$ of the input voltage selector 12, the cause of the current distortions is the switching frequency voltage ripple across these capacitors and the fact that the voltages $u_{xy}$ and $u_{yz}$ cannot be negative.

Therefore, the filter capacitors $C_x$, $C_y$, $C_z$ have been moved to the DC side of the input voltage selector 12. In such a way, the input voltage selector 12 can be used to temporarily disconnect the filter capacitors $C_x$, $C_y$, $C_z$ from the filter inductors $L_f$ by simultaneously turning on two of the three injector switch units 20, e.g. $S_{\overline{aya}}$ and $S_{\overline{byb}}$ as shown in Fig. 8 (this short-circuits the corresponding phase inputs $\overline{a}$ and b). Therefore, it is possible to mitigate the current distortions by toggling the second injection switch such that the average over one switching period of voltage $u_{\overline{ab}}$ equals the grid voltage, i.e. $u_{\overline{ab}}$.

For example, Fig. 8 shows that $S_{\overline{aya}}$ is switched on and off during a number of switching cycles before the zero-crossing and is switched on after the zero-crossing. On the other hand, $S_{\overline{byb}}$ is switched on before the zero-crossing and is switched on and off during a number of switching cycles after the zero-crossing.

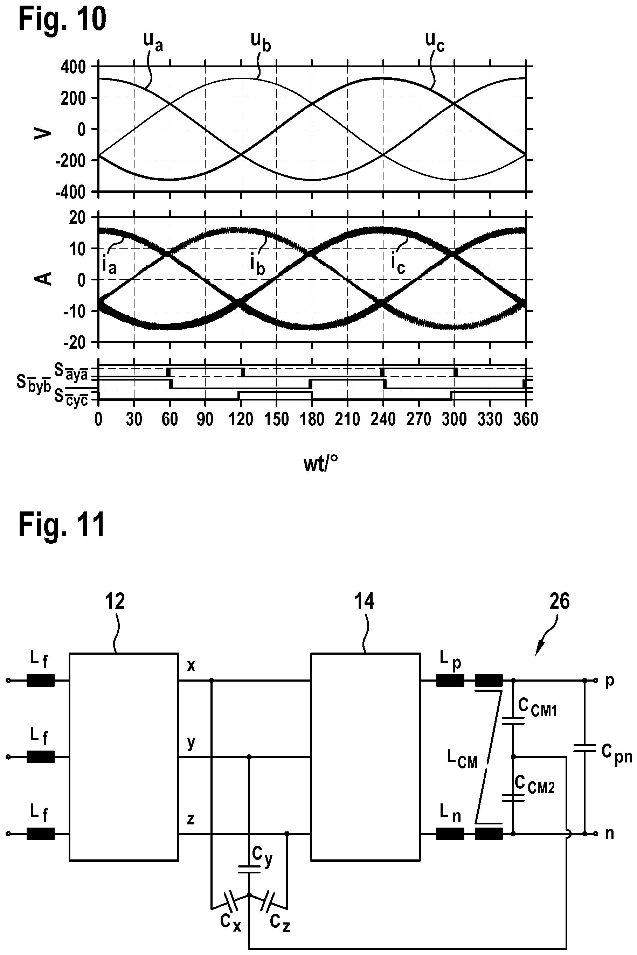

The following considerations focus on the power transfer from the input voltage selector 12 towards the output converter 14 and the intersection of $u_a$ and $u_b$ at $\omega t=\pi/3$. However, they can be generalized for the other five intersections (shown in Fig. 10) and power transfer from the output converter 14 towards the input voltage selector 12.

First of all, it can be seen from Fig. 8 that $u_{xy}$ increases while $S_{\overline{xp}}$ is not conducting, which implies that $u_{xy}$ is minimal when $S_{\overline{xp}}$ is turned off. Therefore, the turn-off of $S_{\overline{xp}}$ is selected as origin for the auxiliary time axis $\tau$.

Fig. 9 shows a diagram with one switching cycle of the output converter 12. The diagram shows a model of the filter capacitor voltage $u_{xy}$ during the first half of the first intersection ($\omega t \approx \pi/3$, $u_a > u_b$). The additional injection switch $S_{\overline{aya}}$ is turned on at time $\tau'$ and is turned off together with $S_{\overline{xp}}$ in order to allow the capacitor with $u_{xy}$ to charge.

In order to simplify analytical calculations $u'_{xy}$ is used as an approximation for $u_{xy}$:

$$u'_{xy}(\tau) = \begin{cases} \hat{u}_{xy} \dfrac{\tau}{(1-d_p)T_s} & if\ \tau \le (1-d_p)T_s \\[2em] \hat{u}_{xy} \dfrac{1}{d_p}\left(1-\dfrac{\tau}{T_s}\right) & if\ \tau > (1-d_p)T_s \end{cases} \tag{1}$$

$$u_{\overline{ab}}(\tau) = \begin{cases} u_{xy}(\tau) \approx u'_{xy}(\tau) & if\ \tau \le \tau' \\ 0 & if\ \tau > \tau' \end{cases} \tag{2}$$

$$\hat{u}_{xy} = \frac{1}{C_f}\int_0^{(1-d_p)/f_s} i_{Cx}-i_{Cy}\,d\tau = \frac{1}{f_s C_f}[(i_x-i_y)(1-d_p)+I_{DC}(d_n-d_p)] \tag{3}$$

$d_p$ may be seen as the switching cycle of $S_{xp}$. The average $\langle u_{\overline{ab}}(\tau)\rangle_{T_s}$ over one switching frequency period $T_s$ of the IVS output voltage $u_{\overline{ab}}$ can be found by integration:

$$\left\langle u_{\overline{ab}}(\tau')\right\rangle_{T_s} = \frac{1}{T_s}\int_0^{\tau'} u_{xy}(\tau)\,d\tau \approx \frac{1}{T_s}\int_0^{\tau'} u'_{xy}(\tau)\,d\tau \tag{4}$$

In order to prevent the current distortions r' has to be selected such that $\langle u_{\overline{ab}}(\tau)\rangle_{Ts}$ equals the corresponding AC grid voltage $u_{ab}$ which is used as reference value $u_{ref}$:

$$u_{ref} = u_a - u_b = u_{ab} \tag{5}$$

By solving (4) an algebraic expression for $\tau'$ can be found:

$$u_{ref} = \left\langle u_{\overline{ab}}(\tau') \right\rangle T_s \Rightarrow$$

$$\tau' = T_s \begin{cases} \sqrt{2\dfrac{u_{ref}}{\hat{u}_{xy}}(1-d_p)} & \text{if } u_{ref} \le \hat{u}_{xy}\dfrac{1-d_p}{2} \\ \\ 1 - \sqrt{d_p - 2d_p\dfrac{u_{ref}}{\hat{u}_{xy}}} & \text{if } u_{ref} > \hat{u}_{xy}\dfrac{1-d_p}{2} \end{cases} \tag{6}$$

This implies that the current distortions can be mitigated by measuring the grid voltages and by evaluating equations (3), (5) and (6) every switching frequency cycle. The additional injection switch $S_{\overline{aya}}$ is then turned on at time $\tau'$ after turn-off of $S_{\overline{xp}}$.

All considerations and calculations given above hold only for the first half of the first sliding intersection, i.e. for $\omega t < \pi/3$. In the second half ($\omega t > \pi/3$), the grid voltage $u_{ab}$ becomes negative which implies that the output voltage of the input voltage selector 12 has to be negative as well, while the filter capacitor voltage $u_{xy}$ remains positive. This is achieved by modulating $S_{\overline{byb}}$ instead of $S_{\overline{aya}}$ as can be seen in Fig. 9.

By replacing the grid voltages $u_a$ and $u_b$ and the injection switches with the corresponding values, this can be generalized for the other two positive grid voltage intersections ($\omega t = 180°$; $300°$). Furthermore, the concept can be expanded to the negative side of the output converter 14 ($S_{nz}$, $d_n$, $u_{yz}$) to mitigate the current distortions at the intersections of negative grid voltages ($\omega t = 0^0$; $120°$; $240°$). The resulting formulas are summarized in the following tables.

| **AC-to-DC Power Transfer** |
| --- |
| Positive Voltage Intersections |
| Origin of $\tau'$: $S_{\overline{xp}}1 \to 0$ |
| Modulation: $S_{\overline{aya}}$, $S_{\overline{byb}}$, $S_{\overline{cyc}}$ |
| $$\tau' = T_s \begin{cases} \sqrt{2\dfrac{u_{ref}}{\hat{u}_{xy}}(1-d_p)} & \text{if } u_{ref} \le \hat{u}_{xy}\dfrac{1-d_p}{2} \\ \\ 1 - \sqrt{d_p\left(1 - 2\dfrac{u_{ref}}{\hat{u}_{xy}}\right)} & \text{if } u_{ref} > \hat{u}_{xy}\dfrac{1-d_p}{2} \end{cases}$$ |
| In-Phase Carriers: $$\hat{u}_{xy} = \frac{T_s}{C_f}[(i_x - i_y)(1-d_p) + I_{DC}(d_n - d_p)]$$ |
| Interleaved Carriers: $$\hat{u}_{xy} = \frac{T_s}{C_f}\begin{cases} (i_x - i_y)(1-d_p) + I_{DC}d_n & \text{if } d_p + d_n \le 1 \\ (i_x - i_y + I_{DC})(1-d_p) & \text{if } d_p + d_n > 1 \end{cases}$$ |
| Negative Voltage Intersections |
| Origin of $\tau'$: $S_{\overline{nz}}1 \to 0$ |
| Modulation: $S_{\overline{aya}}$, $S_{\overline{byb}}$, $S_{\overline{cyc}}$ |

(continued)

| Negative Voltage Intersections |
|---|
| $$\tau' = T_s \begin{cases} \sqrt{2\dfrac{u_{ref}}{\hat{u}_{yz}}(1-d_n)} & if\ u_{ref} \leq \hat{u}_{yz}\dfrac{1-d_n}{2} \\ 1 - \sqrt{d_n\left(1-2\dfrac{u_{ref}}{\hat{u}_{yz}}\right)} & if\ u_{ref} > \hat{u}_{yz}\dfrac{1-d_n}{2} \end{cases}$$ |
| In-Phase Carriers: $$\hat{u}_{yz} = \frac{T_s}{C_f}\left[(i_y - i_z)(1-d_n) + I_{DC}(d_p - d_n)\right]$$ |
| Interleaved Carriers: $$\hat{u}_{yz} = \frac{T_s}{C_f}\begin{cases} (i_y - i_z)(1-d_n) + I_{DC}d_p & if\ d_p + d_n \leq 1 \\ (i_y - i_z + I_{DC})(1-d_n) & if\ d_p + d_n > 1 \end{cases}$$ |
|  |
| DC-to-AC Power Transfer |
| Positive Voltage Intersections |
| Origin of $\tau'$: $S_{\overline{xp}}\ 0 \rightarrow 1$ |
| Modulation: $S_{x\overline{a}}$, $S_{x\overline{b}}$, $S_{x\overline{c}}$ |
| $$\tau' = T_s \begin{cases} \sqrt{2\dfrac{u_{ref}}{\hat{u}_{xy}}d_p} & if\ u_{ref} \leq \hat{u}_{xy}\dfrac{d_p}{2} \\ 1 - \sqrt{(1-d_p)\left(1-2\dfrac{u_{ref}}{\hat{u}_{xy}}\right)} & if\ u_{ref} > \hat{u}_{xy}\dfrac{d_p}{2} \end{cases}$$ |
| In-Phase Carriers: $$\hat{u}_{xy} = \frac{T_s}{C_f}d_p(i_x - i_y - I_{DC})$$ |
| Interleaved Carriers: $$\hat{u}_{xy} = \frac{T_s}{C_f}\begin{cases} (i_x - i_y - I_{DC})d_p - I_{DC}(1-d_n) & if\ d_p + d_n \leq 1 \\ (i_x - i_y - 2I_{DC})d_p & if\ d_p + d_n > 1 \end{cases}$$ |
| Negative Voltage Intersections |
| Origin of $\tau'$: $S_{\overline{nz}}\ 0 \rightarrow 1$ |
| Modulation: $S_{\overline{az}}$, $S_{\overline{bz}}$, $S_{\overline{cz}}$ |

(continued)

| Negative Voltage Intersections |
|---|
| $$\tau' = T_s \begin{cases} \sqrt{2\dfrac{u_{ref}}{\hat{u}_{yz}}d_n} & if \ u_{ref} \le \hat{u}_{yz}\dfrac{d_n}{2} \\ 1 - \sqrt{(1-d_n)\left(1 - 2\dfrac{u_{ref}}{\hat{u}_{yz}}\right)} & if \ u_{ref} > \hat{u}_{yz}\dfrac{d_n}{2} \end{cases}$$ |
| In-Phase Carriers: |
| $$\hat{u}_{yz} = \frac{T_s}{C_f}d_n(i_y - i_z - I_{DC})$$ |
| Interleaved Carriers: |
| $$\hat{u}_{yz} = \frac{T_s}{C_f}\begin{cases}(i_y - i_z - 2I_{DC})d_n & if \ d_p + d_n \le 1 \\ (i_y - i_z - I_{DC})(1 - d_n) & if \ d_p + d_n > 1\end{cases}$$ |

Fig. 10 shows a diagram analogously to Fig. 8. Contrary to Fig. 8, a whole oscillation of the input voltages $u_a$, $u_b$, $u_c$ is depicted. In the lower part of Fig. 10, it is indicated that the switches of the input voltage selector are not simply switched from on to off and vice versa during the corresponding crossing of the AC input voltages. They are switched on and off according to the control method as described above, thus the current distortions in the currents $i_a$, $i_b$, $i_c$ in the vicinity of the crossings are mitigated.

Fig. 11 shows a further electrical converter 10, which may have an input voltage selector 12 and an output converter 14 as described above. In Fig. 11, the output converter 14 has a common mode filter 26 connected to its two DC outputs p, n. In particular, the common mode filter 26 comprises a common mode inductor $L_{CM}$ with a winding in each output p, n and a common core. Furthermore, the common mode filter 26 comprises two series connected common mode capacitors $C_{CM1}$, $C_{CM2}$, which are connecting the two outputs p, n.

The point between the two capacitors $C_{CM1}$, $C_{CM2}$ may be connected to the star-point of the capacitors $C_x$, $C_y$, $C_z$ interconnecting the nodes x, y, z between the input voltage selector 12 and the output converter 14.

It may be possible that further filter inductors $L_p$, $L_n$ are provided in the outputs p, n and that a further DC link capacitor $C_{pn}$ is interconnecting the outputs p, n.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1.    An electrical converter (10), comprising:

an input voltage selector (12) for converting a three-phase AC input voltage provided at three phase inputs (a, b, c) of the electrical converter into three intermediate voltages provided at an upper voltage node (x), a middle voltage node (y) and a lower voltage node (z);
filter capacitors ($C_x$, $C_y$, $C_z$) interconnecting the upper voltage node (x), the middle voltage node (y) and the lower voltage node (z);
an output converter (14) for converting the three intermediate voltages into an output voltage;

wherein a filter inductor ($L_f$) is interconnected in each phase input (a, b, c) and filter capacitors ($C_x$, $C_y$, $C_z$) are arranged only behind the input voltage selector from the point of view of the phase inputs (a, b, c);

wherein the upper voltage node (x), the middle voltage node (y) and the lower voltage (z) node are star-connected or delta-connected via the filter capacitors ($C_x$, $C_y$, $C_z$);

wherein the electrical converter comprises a controller adapted for switching semiconductor switches of the input voltage selector (12) such that the upper voltage node (x) is connected to the phase input (a, b, c) with the highest voltage of the three-phase AC input voltage, the lower voltage node (z) is connected to the phase input (a, b, c) with the lowest voltage of the three-phase AC input voltage, and the middle voltage node (y) is connected to the phase input (a, b, c) with a voltage between the highest voltage and the lowest voltage;

**characterized in that** when two of the voltages of the three-phase AC input voltage are crossing, the controller is configured to switch semiconductor switches of the input voltage selector (12) such that the corresponding two phase inputs ($\bar{a}$, $\bar{b}$, $\bar{c}$) are short-circuited in order to lower current distortions in the phase inputs (a, b, c) of the electrical converter (10);

wherein the two phase inputs (a, b, c) of the electrical converter and the corresponding phase inductors are short-circuited such that a voltage average of a voltage between the corresponding phase inputs ($\bar{a}$, $\bar{b}$, $\bar{c}$) of the input voltage selector (12) equals a grid voltage provided between the two phase inputs (a, b, c) of the electrical converter (10); and

a duration, during which the two phase inputs (a, b, c) are short-circuited is determined such that during each switching cycle of a PWM modulation scheme of the output converter, the voltage average equals a grid voltage provided between the two phase inputs (a, b, c) of the electrical converter (10).

2.  The electrical converter (10) of claim 1,
    wherein each of the upper voltage node (x), the middle voltage node (y) and the lower voltage node (z) is connected via a filter inductor ($L_f$) with the filter capacitors ($C_x$, $C_y$, $C_z$) interconnecting the upper voltage node (x), the middle voltage node (y) and the lower voltage node (z).

3.  The electrical converter (10) of claim 1 or 2,
    wherein the input voltage selector (12) comprises three selector legs (16) for interconnecting one of the phase inputs (a, b, c) with the upper voltage node (x), the middle voltage node (y) and the lower voltage node (z), each selector leg (16) comprising a half-bridge (18) and an injector switch unit (20), the half-bridge (18) connected to the upper voltage node (x) and lower voltage node (z) and the injector switch unit (20) connected to the middle voltage node (z),

4.  The electrical converter (10) of claim 3,
    wherein the half-bridge (18) comprises diodes.

5.  The electrical converter (10) of claim 3 or 4,
    wherein the half-bridge (18) comprises controllable semiconductor switches.

6.  The electrical converter (10) of one of claims 3 to 5,

    wherein the injector switch unit (20) comprises two series-connected semiconductor switches, which are reverse to each other; or
    wherein the injector switch unit comprises (20) one controllable semiconductor switch interconnected in parallel with two pairs of two series-connected diodes; or
    wherein the injector switch unit (20) comprises a half-bridge of diodes and/or controllable semiconductor switches.

7.  The electrical converter (10) of one of claims 3 to 6,

    wherein the injector switch unit (20) interconnects a middle point of the half-bridge (18) with the middle voltage node (y); or
    wherein the injector switch unit (20) is interconnected between arms of the half-bridge (18).

8.  The electrical converter (10) of one of the preceding claims,
    wherein the output converter is or comprises at least one of:

    a boost converter (14a),
    a non-inverting buck-boost converter (14b),

a SEPIC converter (14c),
a Cuk converter (14d),
an inverting buck-boost converter (14e),
interleaved buck converters (14f).

9. The electrical converter (10) of one of the preceding claims,

   wherein the output converter is a DC-to-DC converter (14, 14a to 14l) or a DC-to-AC converter (14m, 14n); and/or
   wherein the output converter is an isolated output converter (14k, 14l) comprising a transformer between two subconverter units.

10. The electrical converter (10) of one of the preceding claims,

    wherein the output converter (14g to 14j, 14m, 14n) comprises three-level half-bridges; and/or
    wherein the half-bridges are NPC based or T-type based.

11. The electrical converter (10) of one of the preceding claims,

    wherein a common mode filter (26) is provided at an output (p, n) of the output converter (14); and optionally
    wherein a star-point of the filter capacitors ($C_x$, $C_y$, $C_z$) interconnecting the upper voltage node (x), the middle voltage node (y) and the lower voltage node (z) is connected with the common mode filter (26).

12. A method for controlling an electrical converter (10) according to one of the preceding claims, wherein the method is performed by the controller of the electrical converter (10) and comprises:

    switching semiconductor switches of the input voltage selector (12) such that the upper voltage node (x) is connected to the phase input (a, b, c) with the highest voltage of the three-phase AC input voltage, the lower voltage node (z) is connected to the phase input (a, b, c) with the lowest voltage of the three-phase AC input voltage, and the middle voltage node (y) is connected to the phase input (a, b, c) with a voltage between the highest voltage and the lowest voltage;
    **characterized in**
    **that**, when two of the voltages of the three-phase AC input voltage are crossing, the semiconductor switches of the input voltage selector (12) are switched such that the corresponding two phase inputs ($\bar{a}$, $\bar{b}$, $\bar{c}$) are short-circuited in order to lower current distortions in the phase inputs (a, b, c) of the electrical converter (10);
    **that** the two phase inputs (a, b, c) of the electrical converter and the corresponding phase inductors are short-circuited such that a voltage average of a voltage between the corresponding phase inputs ($\bar{a}$, $\bar{b}$, $\bar{c}$) of the input voltage selector (12) equals a grid voltage provided between the two phase inputs (a, b, c) of the electrical converter (10); and
    **that** a duration, during which the two phase inputs (a, b, c) are short-circuited is determined such that during each switching cycle of a PWM modulation scheme of the output converter, the voltage average equals a grid voltage provided between the two phase inputs (a, b, c) of the electrical converter (10).

13. The method of claim 12,
    wherein the time at which the two phase inputs (a, b, c) are short-circuited is determined based on a time, at which a semiconductor switch of the electrical converter (10) is switched based on a PWM modulation scheme.

**Patentansprüche**

1. Elektrischer Umrichter (10), umfassend:

   einen Eingangsspannungsauswahlschalter (12) zum Umwandeln einer Dreiphasen-AC-Eingangsspannung, die an drei Phaseneingängen (a, b, c) des elektrischen Umrichters bereitgestellt werden, in drei Zwischenspannungen, die an einem oberen Spannungsknoten (x) einem mittleren Spannungsknoten (y) und einem unteren Spannungsknoten (z) bereitgestellt werden;
   Filterkondensatoren ($C_x$, $C_y$, $C_z$), welche den oberen Spannungsknoten (x), den mittleren Spannungsknoten (y) und den unteren Spannungsknoten (z) miteinander verbinden;
   einen Ausgangsumrichter (14) zum Umwandeln der drei Zwischenspannungen in eine Ausgangsspannung;

wobei in jeden Phaseneingang (a, b, c) eine Filterinduktivität ($L_f$) zwischengeschaltet ist und wobei die Filterkondensatoren ($C_x$, $C_y$, $C_z$) aus der Sicht der Phaseneingänge (a, b, c) erst hinter dem Eingangsspannungsauswahlschalter angeordnet sind;

wobei der obere Spannungsknoten (x), der mittlere Spannungsknoten (y) und der untere Spannungsknoten (z) in einer Sternschaltung oder einer Deltaschaltung über die Filterkondensatoren ($C_x$, $C_y$, $C_z$) verbunden sind;

wobei der elektrische Umrichter eine Steuereinheit umfasst, die geeignet ist, um Halbleiterschalter des Eingangsspannungsauswahlschalters (12) so zu schalten, dass der obere Spannungsknoten (x) mit dem Phaseneingang (a, b, c) mit der höchsten Spannung der drei Dreiphasen-AC-Eingangsspannung verbunden ist, dass der untere Spannungsknoten (z) mit dem Phaseneingang (a, b, c) mit der niedrigsten Spannung der drei Dreiphasen-AC-Eingangsspannung verbunden ist, und dass der mittlere Spannungsknoten (y) mit dem Phaseneingang (a, b, c) mit einer Spannung zwischen der höchsten Spannung und der niedrigsten Spannung verbunden ist;

**dadurch gekennzeichnet, dass**, wenn sich zwei der Spannungen der Dreiphasen-AC-Eingangsspannung kreuzen, die Steuereinheit konfiguriert ist, um die Halbleiterschalter des Eingangsspannungsauswahlschalters (12) so umzuschalten, dass die entsprechenden beiden Phaseneingänge ($\bar{a}$, $\bar{b}$, $\bar{c}$) kurzgeschlossen werden, um Stromverzerrungen in den Phaseneingängen (a, b, c) des elektrischen Umrichters (10) zu verringern;

wobei

die beiden Phaseneingänge (a, b, c) des elektrischen Umrichters und die entsprechenden Phaseninduktivitäten so kurzgeschlossen werden, dass ein Spannungsmittelwert einer Spannung zwischen den entsprechenden Phaseneingängen ($\bar{a}$, $\bar{b}$, $\bar{c}$) des Eingangsspannungsauswahlschalters (12) gleich einer Netzspannung ist, die zwischen den beiden Phaseneingängen (a, b, c) des elektrischen Umrichters (10) bereitgestellt wird; und

eine Dauer, während der die beiden Phaseneingänge (a, b, c) kurzgeschlossen sind, ermittelt wird, sodass der Spannungsmittelwert, während jedes Schaltzyklus eines PWM-Modulationsschemas des Ausgangsumrichters gleich einer Netzspannung ist, die zwischen den beiden Phaseneingängen (a, b, c) des elektrischen Umrichters (10) bereitgestellt wird.

2. Elektrischer Umrichter (10) nach Anspruch 1,
wobei jeder des oberen Spannungsknotens (x), des mittleren Spannungsknotens (y) und des unteren Spannungsknotens (z) über eine Filterinduktivität ($L_f$) mit den Filterkondensatoren ($C_x$, $C_y$, $C_z$) verbunden ist, welche den oberen Spannungsknoten (x), den mittleren Spannungsknoten (y) und den unteren Spannungsknoten (z) miteinander verbinden.

3. Elektrischer Umrichter (10) nach Anspruch 1 oder 2,
wobei der Eingangsspannungsauswahlschalter (12) drei Auswahlschalterzweige (16) zum Verbinden eines der Phaseneingänge (a, b, c) mit dem oberen Spannungsknoten (x), dem mittleren Spannungsknoten (y) und dem unteren Spannungsknoten (z) umfasst, wobei jeder Auswahlschalterzweig (16) eine Halbbrücke (18) und eine Injektorschalteinheit (20) umfasst, wobei die Halbbrücke (18) mit dem oberen Spannungsknoten (x) und dem unteren Spannungsknoten (z) verbunden ist und wobei die Injektorschalteinheit (20) mit dem mittleren Spannungsknoten (z) verbunden ist.

4. Elektrischer Umrichter (10) nach Anspruch 3,
wobei die Halbbrücke (18) Dioden umfasst.

5. Elektrischer Umrichter (10) nach Anspruch 3 oder 4,
wobei die Halbbrücke (18) steuerbare Halbleiterschalter umfasst.

6. Elektrischer Umrichter (10) nach einem der Ansprüche 3 bis 5,

wobei die Injektorschalteinheit (20) zwei in Reihe geschaltete Halbleiterschalter umfasst, die entgegengesetzt zueinander sind; oder

wobei die Injektorschalteinheit (20) einen steuerbaren Halbleiterschalter umfasst, der parallel zu zwei Paaren von zwei in Reihe geschalteten Dioden geschaltet ist; oder

wobei die Injektorschalteinheit (20) eine Halbbrücke aus Dioden und/oder aus steuerbaren Halbleiterschaltern umfasst.

7. Elektrischer Umrichter (10) nach einem der Ansprüche 3 bis 6,

wobei die Injektorschalteinheit (20) einen mittleren Punkt der Halbbrücke (18) mit dem mittleren Spannungsknoten (y) verbindet; oder
wobei die Injektorschalteinheit (20) zwischen Arme der Halbbrücke (18) geschaltet ist.

8. Elektrischer Umrichter (10) nach einem der vorhergehenden Ansprüche,
wobei der Ausgangsumrichter mindestens einer ist, oder einen umfasst von:

einem Boost-Umrichter (14a),
einem nicht-invertierenden Buck-Boost-Umrichter (14b),
einem SEPIC-Umrichter (14c),
einem Cuk-Umrichter (14d),
einem invertierenden Buck-Boost-Umrichter (14e), und
verschachtelten Buck-Umrichtern (14f).

9. Elektrischer Umrichter (10) nach einem der vorhergehenden Ansprüche,

wobei der Ausgangsumrichter ein DC-DC-Umrichter (14, 14a bis 14l) oder ein DC-AC-Umrichter (14m, 14n) ist; und/oder
wobei der Ausgangsumrichter ein isolierter Ausgangsumrichter (14k, 14l) ist, der einen Transformator zwischen zwei Teilumrichtereinheiten umfasst.

10. Elektrischer Umrichter (10) nach einem der vorhergehenden Ansprüche,

wobei der Ausgangsumrichter (14g bis 14j, 14m, 14n) dreistufige Halbbrücken umfasst; und/oder
wobei die Halbbrücken NPC-basiert oder T-Typ-basiert sind.

11. Elektrischer Umrichter (10) nach einem der vorhergehenden Ansprüche,

wobei ein Gleichtaktfilter (26) an einem Ausgang (p, n) des Ausgangsumrichters (14) bereitgestellt wird; und
wobei ein Sternpunkt der Filterkondensatoren ($C_x$, $C_y$, $C_z$), der den oberen Spannungsknoten (x), den mittleren Spannungsknoten (y) und den unteren Spannungsknoten (z) miteinander verbindet, optional mit dem Gleichtaktfilter (26) verbunden ist.

12. Verfahren zum Steuern eines elektrischen Umrichters (10) nach einem der vorhergehenden Ansprüche, wobei das Verfahren durch die Steuereinheit des elektrischen Umrichters (10) ausgeführt wird und umfasst:

Umschalten von Halbleiterschaltern des Eingangsspannungsauswahlschalters (12), sodass der obere Spannungsknoten (x) mit dem Phaseneingang (a, b, c) mit der höchsten Spannung der drei Dreiphasen-AC-Eingangsspannung verbunden ist, dass der untere Spannungsknoten (z) mit dem Phaseneingang (a, b, c) mit der niedrigsten Spannung der drei Dreiphasen-AC-Eingangsspannung verbunden ist, und der mittlere Spannungsknoten (y) mit dem Phaseneingang (a, b, c) mit einer Spannung zwischen der höchsten Spannung und der niedrigsten Spannung verbunden ist;
**dadurch gekennzeichnet,**
**dass**, wenn sich zwei der Spannungen der Dreiphasen-AC-Eingangsspannung kreuzen, die Halbleiterschalter des Eingangsspannungsauswahlschalters (12) so geschaltet werden,
**dass** die entsprechenden beiden Phaseneingänge ($\overline{a}$, $\overline{b}$, $\overline{c}$) kurzgeschlossen werden, um Stromverzerrungen in den Phaseneingängen (a, b, c) des elektrischen Umrichters (10) zu verringern;
**dass** die beiden Phaseneingänge (a, b, c) des elektrischen Umrichters und die entsprechenden Phaseninduktivitäten so kurzgeschlossen werden, dass ein Spannungsmittelwert einer Spannung zwischen den entsprechenden Phaseneingängen ($\overline{a}$, $\overline{b}$, $\overline{c}$) des Eingangsspannungsauswahlschalters (12) gleich einer Netzspannung ist, die zwischen den beiden Phaseneingängen (a, b, c) des elektrischen Umrichters (10) bereitgestellt wird; und
**dass** eine Dauer, während der die beiden Phaseneingänge (a, b, c) kurzgeschlossen sind, ermittelt wird, sodass der Spannungsmittelwert, während jedes Schaltzyklus eines PWM-Modulationsschemas des Ausgangsumrichters gleich einer Netzspannung ist, die zwischen den beiden Phaseneingängen (a, b, c) des elektrischen Umrichters (10) bereitgestellt wird.

13. Verfahren nach Anspruch 12,
wobei der Zeitpunkt, zu dem die beiden Phaseneingänge (a, b, c) kurzgeschlossen werden, aufgrund eines Zeitpunkts ermittelt wird, zu dem ein Halbleiterschalter des elektrischen Umrichters (10) aufgrund eines PWM-Modulationsschemas umgeschaltet wird.

**Revendications**

1. Convertisseur électrique (10), comprenant :

   un sélecteur de tension d'entrée (12) pour convertir une tension d'entrée alternative triphasée fournie sur trois entrées de phase (a, b, c) du convertisseur électrique en trois tensions intermédiaires fournies sur un nœud à tension supérieure (x), un nœud à tension médiane (y) et un nœud à tension inférieure (z) ;
   des condensateurs de filtrage ($C_x$, $C_y$, $C_z$) interconnectant le nœud à tension supérieure (x), le nœud à tension médiane (y) et le nœud à tension inférieure (z) ;
   un convertisseur de sortie (14) pour convertir les trois tensions intermédiaires en une tension de sortie ;
   dans lequel une inductance de filtrage ($L_f$) est interconnectée dans chaque entrée de phase (a, b, c) et des condensateurs de filtrage ($C_x$, $C_y$, $C_z$) sont disposés uniquement derrière le sélecteur de tension d'entrée du point de vue des entrées de phase (a, b, c) ;
   dans lequel le nœud à tension supérieure (x), le nœud à tension médiane (y) et le nœud à tension inférieure (z) sont connectés en étoile ou connectés en delta par l'intermédiaire des condensateurs de filtrage ($C_x$, $C_y$, $C_z$) ;
   dans lequel le convertisseur électrique comprend un dispositif de commande conçu pour faire commuter des commutateurs à semi-conducteurs du sélecteur de tension d'entrée (12) de telle sorte que le nœud à tension supérieure (x) soit connecté à l'entrée de phase (a, b, c) ayant la tension la plus élevée de la tension d'entrée alternative triphasée, que le nœud à tension inférieure (z) soit connecté à l'entrée de phase (a, b, c) ayant la tension la plus basse de la tension d'entrée de la tension alternative triphasée, et que le nœud à tension médiane (y) soit connecté à l'entrée de phase (a, b, c) ayant une tension comprise entre la tension la plus élevée et la tension la plus basse ;
   **caractérisé en ce que**,
   lorsque deux des tensions de la tension d'entrée alternative triphasée se croisent, le dispositif de commande est configuré pour faire commuter des commutateurs à semi-conducteurs du sélecteur de tension d'entrée (12) de telle sorte que les deux entrées de phase correspondantes ($\overline{a}$, $\overline{b}$, $\overline{c}$) soient court-circuitées afin de réduire les distorsions de courant dans les entrées de phase (a, b, c) du convertisseur électrique (10) ;
   dans lequel les deux entrées de phase (a, b, c) du convertisseur électrique et les inductances de phase correspondantes sont court-circuitées de telle sorte qu'une moyenne de tension d'une tension entre les entrées de phase correspondantes ($\overline{a}$, $\overline{b}$, $\overline{c}$) du sélecteur de tension d'entrée (12) soit égale à une tension de réseau fournie entre les deux entrées de phase (a, b, c) du convertisseur électrique (10) ; et
   une durée, pendant laquelle les deux entrées de phase (a, b, c) sont court-circuitées, est déterminée de telle sorte que pendant chaque cycle de commutation d'une technique de modulation PWM du convertisseur de sortie, la moyenne de tension soit égale à une tension de réseau fournie entre les deux entrées de phase (a, b, c) du convertisseur électrique (10).

2. Convertisseur électrique (10) selon la revendication 1,
   dans lequel chacun du nœud à tension supérieure (x), du nœud à tension médiane (y) et du nœud à tension inférieure (z) est connecté par l'intermédiaire d'une inductance de filtrage ($L_f$) aux condensateurs de filtrage ($C_x$, $C_y$, $C_z$) interconnectant le nœud à tension supérieure (x), le nœud à tension médiane (y) et le nœud à tension inférieure (z) .

3. Convertisseur électrique (10) selon la revendication 1 ou 2,
   dans lequel le sélecteur de tension d'entrée (12) comprend trois branches de sélecteur (16) pour interconnecter l'une des entrées de phase (a, b, c) au nœud à tension supérieure (x), au nœud à tension médiane (y) et au nœud à tension inférieure (z), chaque branche de sélecteur (16) comprenant un demi-pont (18) et une unité de commutation d'injecteur (20), le demi-pont (18) étant connecté au nœud à tension supérieure (x) et au nœud à tension inférieure (z) et l'unité de commutation d'injecteur (20) étant connectée au nœud à tension médiane (z).

4. Convertisseur électrique (10) selon la revendication 3,
   dans lequel le demi-pont (18) comprend des diodes.

5. Convertisseur électrique (10) selon la revendication 3 ou 4,
   dans lequel le demi-pont (18) comprend des commutateurs à semi-conducteurs commandables.

6. Convertisseur électrique (10) selon l'une des revendications 3 à 5,

dans lequel l'unité de commutation d'injecteur (20) comprend deux commutateurs à semi-conducteurs connectés en série, qui sont inversés l'un par rapport à l'autre ; ou

dans lequel l'unité de commutation d'injecteur (20) comprend un commutateur à semi-conducteur commandable interconnecté en parallèle avec deux paires de deux diodes connectées en série ; ou

dans lequel l'unité de commande d'injecteur (20) comprend un demi-pont de diodes et/ou de commutateurs à semi-conducteurs commandables.

7. Convertisseur électrique (10) selon l'une des revendications 3 à 6,

dans lequel l'unité de commutation d'injecteur (20) interconnecte un point médian du demi-pont (18) au nœud à tension médiane (y) ; ou

dans lequel l'unité de commutation d'injecteur (20) est interconnectée entre des bras du demi-pont (18).

8. Convertisseur électrique (10) selon l'une des revendications précédentes,
dans lequel le convertisseur de sortie est ou comprend au moins l'un des éléments suivants :

un convertisseur élévateur (14a),
un convertisseur abaisseur-élévateur non-inverseur (14b),
un convertisseur SEPIC (14c),
un convertisseur Cuk (14d),
un convertisseur abaisseur-élévateur inverseur (14e),
des convertisseurs abaisseurs entrelacés (14f).

9. Convertisseur électrique (10) selon l'une des revendications précédentes,
dans lequel le convertisseur de sortie est un convertisseur continu-continu (14, 14a à 14l) ou un convertisseur continu-alternatif (14m, 14n) ; et/ou dans lequel le convertisseur de sortie est un convertisseur de sortie isolé (14k, 14l) comprenant un transformateur entre deux unités de sous-convertisseur.

10. Convertisseur électrique (10) selon l'une des revendications précédentes,
dans lequel le convertisseur de sortie (14g à 14j, 14m, 14n) comprend des demi-ponts à trois niveaux ; et/ou dans lequel les demi-ponts sont à base de NPC ou à base de type T.

11. Convertisseur électrique (10) selon l'une des revendications précédentes,

dans lequel un filtre de mode commun (26) est prévu à une sortie (p, n) du convertisseur de sortie (14) ; et facultativement

dans lequel un point d'étoile des condensateurs de filtrage ($C_x$, $C_y$, $C_z$) interconnectant le nœud à tension supérieure (x), le nœud à tension médiane (y) et le nœud à tension inférieure (z) est connecté au filtre de mode commun (26).

12. Procédé de commande d'un convertisseur électrique (10) selon l'une des revendications précédentes, dans lequel le procédé est exécuté par le dispositif de commande du convertisseur électrique (10) et comprend :

la commutation de commutateurs à semi-conducteurs du sélecteur de tension d'entrée (12) de telle sorte que le nœud à tension supérieure (x) soit connecté à l'entrée de phase (a, b, c) ayant la tension la plus élevée de la tension d'entrée alternative triphasée, que le nœud à tension inférieure (z) soit connecté à l'entrée de phase (a, b, c) ayant la tension la plus basse de la tension d'entrée alternative triphasée, et que le nœud à tension médiane (y) soit connecté à l'entrée de phase (a, b, c) ayant une tension comprise entre la tension la plus élevée et la tension la plus basse ;

**caractérisé en ce que**,

lorsque deux des tensions de la tension d'entrée alternative triphasée se croisent, les commutateurs à semi-conducteurs du sélecteur de tension d'entrée (12) sont commutés de telle sorte que les deux entrées de phase correspondantes ($\overline{a}, \overline{b}, \overline{c}$) soient court-circuitées afin de réduire les distorsions de courant dans les entrées de phase (a, b, c) du convertisseur électrique (10) ;

**en ce que** les deux entrées de phase (a, b, c) du convertisseur électrique et les inductances de phase correspondantes sont court-circuitées de telle sorte qu'une moyenne de tension d'une tension entre les entrées de phase correspondantes ($\overline{a}, \overline{b}, \overline{c}$) du sélecteur de tension d'entrée (12) soit égale à une tension de réseau fournie entre les deux entrées de phase (a, b, c) du convertisseur électrique (10) ; et

**en ce qu'**une durée, pendant laquelle les deux entrées de phase (a, b, c) sont court-circuitées, est déterminée de telle sorte que pendant chaque cycle de commutation d'une technique de modulation PWM du convertisseur de sortie, la moyenne de tension soit égale à une tension de réseau fournie entre les deux entrées de phase (a, b, c) du convertisseur électrique (10).

13. Procédé selon la revendication 12,
dans lequel l'instant où les deux entrées de phase (a, b, c) sont court-circuitées est déterminé sur la base d'un instant où un commutateur à semi-conducteur du convertisseur électrique (10) est commuté sur la base d'une technique de modulation PWM.

Fig. 1

Fig. 2

# Fig. 3A

# Fig. 3B

## Fig. 3C

## Fig. 3D

## Fig. 4A

## Fig. 4B

## Fig. 4C

## Fig. 4D

# Fig. 4E

# Fig. 4F

# Fig. 5A

# Fig. 5B

# Fig. 5C

# Fig. 5D

**Fig. 6A**

**Fig. 6B**

# Fig. 7A

14m

# Fig. 7B

14n

# Fig. 8

# Fig. 9

# Fig. 10

# Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 704553 A2

**Non-patent literature cited in the description**

- **J. W. KOLAR ; T. FRIEDLI.** The Essence of Three-Phase PFC Rectifier Systems - Part I. *IEEE Transactions on Power Electronics,* January 2013, vol. 28 (1), 176-198

- **T. SOEIRO ; T. FRIEDLI ; J. W. KOLAR.** Three-phase high power factor mains interface concepts for Electric Vehicle battery charging systems. *Applied Power Electronics Conference and Exposition (APEC),* February 2012, 2603-2610